# EUROPÄISCHE PATENTANMELDUNG

(11) **EP 3 643 580 A1**
(43) Veröffentlichungstag der Anmeldung: **29.04.2020**
(21) Anmeldenummer: 19203437.9
(22) Anmeldetag: 15.10.2019
(51) Int. Cl.: B61L 23/06

(54) **ÜBERWACHUNGSSYSTEM UND VERFAHREN ZUM ERFASSEN VON VERKEHRSTEILNEHMERN IN EINEM ERFASSUNGSBEREICH**

(30) Priorität: 23.10.2018 CH 12912018
(71) Anmelder: Greatcom AG, 8132 Egg (CH)
(72) Erfinder: Heimgartner, Remo, 8703 Erlenbach (CH); Petrillo, Vincenzo, 8730 Uznach (CH)
(74) Vertreter: Gachnang, Hans Rudolf

(57) **Zusammenfassung**

Das Überwachungssystem und das Verfahren zum Überwachen von Verkehrsteilnehmern sind dazu vorgesehen, von diesen Verkehrsteilnehmern emittierte elektromagnetische Strahlung zu erfassen. Die erfassten Emissionsmuster werden mit gespeicherten Vergleichsmustern (P) verglichen.

In Abhängigkeit des Vergleichsergebnisses wird eine Ausgabegrösse (A) bereitgestellt, welche repräsentativ ist für erkannte Verkehrsteilnehmer.

## Beschreibung

Gegenstand der Erfindung ist ein Überwachungssystem sowie ein Verfahren zum Erfassen von Verkehrsteilnehmern in einem Erfassungsbereich gemäss den Merkmalen der Ansprüche 1 und 10.

Es gibt eine Vielzahl von Überwachungsaufgaben, bei denen lokal in einem Gebiet bzw. Bereich die Anwesenheit oder die Bewegung von Verkehrsteilnehmern erkannt werden sollen. Verkehrsteilnehmer können z.B. Fahrzeuge wie Autos, Motorräder oder Eisenbahnzüge sein, die sich in der Regel auf Verkehrswegen wie Strassen oder Schienen bewegen. Zu den Verkehrsteilnehmern zählen z.B. auch land- oder forstwirtschaftliche Fahrzeuge, die abseits von Verkehrswegen aktiv sind, oder Flugobjekte wie Drohnen, die sich oberhalb der Erdoberfläche bewegen können. Personen, die z.B. als Fussgänger oder Fahrradfahrer auf Verkehrswegen oder abseits davon unterwegs sind, sind ebenfalls Verkehrsteilnehmer.

Gebiete umfassen insbesondere Verkehrswege wie Strassen, Wege oder Bahngeleise. Gebiete können auch mehr oder weniger scharf abgrenzbare Flächen oder Räume umfassen, beispielsweise ein Feld, ein Waldstück, ein Fabrikareal oder eine Umgebung entlang eines Verkehrsweges oder einer Landesgrenze.

Bei Baustellen an Strassen oder Geleisen ist die zuverlässige Erkennung sich nähernder Fahrzeuge eine wichtige Voraussetzung zur Verhinderung von Unfällen. Bei Arbeiten an Geleisen erfolgt die Baustellensicherung oft durch mehrere Personen, die einen Alarm auslösen, wenn sich Schienenfahrzeuge nähern. Dies ist aufwendig und teuer und zudem mit einem vergleichsweise hohen Fehlerrisiko verbunden.

Aus der EP0816200A1 ist ein Warnsystem zum Erkennen herannahender Eisenbahnzüge bekannt. An beiden Schienen eines Geleises werden akustische Sensoren befestigt, welche die Geräusche eines herannahenden Zuges erfassen. Die Signale der Sensoren werden gefiltert, wobei die Filter nur einen bestimmten Frequenzbereich passieren lassen. Anschliessend werden die gefilterten Signale mit je einem Analog-Digital-Wandler digitalisiert und digital weiterverarbeitet. Wenn die Signale beider Sensoren einen vorgegebenen Schwellwert überschreiten, wird ein Alarmsignal für einen herannahenden Zug ausgelöst. Wenn die Signale der beiden Sensoren sich stark unterscheiden, wird dies als Indiz für einen Defekt interpretiert und eine entsprechende Warnung ausgegeben. Die Anwendung dieses Warnsystems ist beschränkt auf Bahngeleise.

Bei Baustellen an Strassen werden in der Regel Ampelanlagen zur Verkehrsregelung eingesetzt. Solche Ampelanlagen können mehrere Ampeln umfassen, die zum Beispiel über Funk koordiniert miteinander gesteuert werden. Bei den Ampeln können Detektoren vorgesehen sein, die herannahende oder stehende Fahrzeuge in einem Erfassungsbereich dieser Detektoren erkennen. Solche Detektoren sind beispielsweise optische Näherungsschalter oder Ultraschall- oder Radarsensoren, die aktiv Signale aussenden und wieder empfangen, wenn sie von Fahrzeugen innerhalb eines Erfassungsbereichs reflektiert worden sind. Der Erfassungsbereich ist jeweils beschränkt auf eine nahe Umgebung des Detektors, die von den ausgesendeten Signalen und von den Reflexionseigenschaften der zu erfassenden Objekte abhängig ist. Die Detektoren müssen somit unmittelbar beim jeweiligen Verkehrsweg angeordnet und entsprechend der zu erfassenden Fahrzeuge ausgerichtet werden. Bei solchen Ampelsystemen ist die Sicherheit letztlich davon abhängig, dass die Ampelsignale von den Verkehrsteilnehmern wahrgenommen und befolgt werden.

Eine Aufgabe der vorliegenden Erfindung ist es, ein einfach anzuwendendes und zuverlässig funktionierendes Überwachungssystem zur Erfassung von Verkehrsteilnehmern in einem Erfassungsgebiet zu schaffen.

Diese Aufgabe wird gelöst durch ein Überwachungssystem und durch ein Verfahren zum Erfassen von Verkehrsteilnehmern gemäss den Merkmalen der unabhängigen Ansprüche 1 und 10.

Die Erfindung beruht auf der Überlegung, dass nahezu alle Verkehrsteilnehmer elektrische oder elektronische Vorrichtungen umfassen oder mitführen. Die Aktivität solcher Vorrichtungen verursacht elektromagnetische Strahlungsemissionen bei einer oder mehreren Frequenzen, wobei das Leistungsdichtespektrum und/oder dessen zeitliche Entwicklung typische Muster aufweisen.

Wenn Strahlungsemissionen von zu erfassenden Verkehrsteilnehmern bekannt und zumindest in einem bestimmten bzw. relevanten Teil des Frequenzspektrums deutlich stärker sind als möglicherweise vorhandene Störstrahlung, können solche Verkehrsteilnehmer mit vergleichsweise einfach ausgebildeten Überwachungssystemen erfasst werden.

Das Überwachungssystem umfasst mindestens ein Erfassungsgerät mit einer Empfangsvorrichtung für elektromagnetische Strahlung als Messgrösse und eine Auswertevorrichtung, die dazu ausgebildet ist, auf der Messgrösse basierende Muster zu erkennen und in deren Abhängigkeit eine Ausgangsgrösse bereitzustellen.

Vorzugsweise umfasst die Empfangsvorrichtung eine integrierte Antenne zum Empfangen der elektromagnetischen Strahlung. Vorzugsweise ist die Antenne zusammen mit weiteren Elementen des Detektors auf einem gemeinsamen Substrat angeordnet. Dies ermöglicht einen kompakten Aufbau des Erfassungsgeräts.

Alternativ kann die Empfangsvorrichtung einen Antennenanschluss für eine extern anschliessbare Antenne umfassen. Die Empfangsvorrichtung umfasst eine Filtereinrichtung und stellt ein auf der Messgrösse basierendes Nutzsignal bereit. Dieses wird von der Auswertevorrichtung weiterverarbeitet. In einem Vergleicher der Auswertevorrichtung wird das Nutzsignal mit mindestens einem vorgegebenen Vergleichsmuster verglichen. Die Auswertevorrichtung stellt eine vom Vergleichsergebnis abhängige Ausgangsgrösse bereit.

Vorzugsweise werden die von der Antenne empfangenen Signale mit einem aktiven Impedanzwandler gewandelt, insbesondere mit einem Verstärker verstärkt, und so als Nutzsignale für die weitere Verarbeitung bereitgestellt.

Die Filtereinrichtung umfasst ein oder mehrere Filter, die vorzugsweise so auf den bzw. die relevanten

Frequenzbereiche abgestimmt oder abstimmbar sind, dass nur Messsignale in den relevanten Frequenzbereichen erfasst werden. Allgemein definiert die Filtereinrichtung eine Transferfunktion mit einem frequenzabhängigen Verstärkungsfaktor für die Messgrösse. Ein Verstärkungsfaktor zwischen 0 und 1 bedeutet eine Dämpfung bzw. Abschwächung der empfangenen Messsignale.

Die Empfangsvorrichtung umfasst in der Regel einen Analog-Empfänger, der die gegebenenfalls gefilterten und/oder frequenzabhängig verstärkten Messsignale ausgangsseitig unmittelbar in Echtzeit als Nutzsignale bereitstellt. Der Analog-Empfänger kann auch dazu ausgebildet sein, Messsignale während mindestens eines Messintervalls mit vorgegebener Dauer zu erfassen und z.B. durch Integration und/oder Mittelwertbildung weiterzubearbeiten, um so ausgangsseitig ein verbessertes Nutzsignal zur weiteren Verarbeitung bereitzustellen.

Alternativ oder zusätzlich zu einem Analog-Empfänger kann die Empfangsvorrichtung auch einen Empfänger umfassen, der die spektrale Leistungsdichte des Messsignals ermittelt. Insbesondere kann dafür ein FFT-Empfänger verwendet werden, der die Messgrösse während jeweils eines Messintervalls erfasst und durch eine Fast-Fourier-Transformation (FFT) die Leistungsdichte in Abhängigkeit der Frequenz ermittelt. Die Messintervalle haben üblicherweise eine Dauer in der Grössenordnung von etwa 1ms bis etwa 100ms, beispielsweise etwa 50ms. Vorzugsweise kann die Dauer der Messintervalle von einer Steuerelektronik vorgegeben werden. Das Überwachungssystem kann so an unterschiedliche Anforderungen angepasst werden. Mit längeren Messintervallen kann die spektrale Verteilung der Leistungsdichte bzw. deren Frequenzabhängigkeit mit grösserer Genauigkeit und höherer Auflösung bestimmt werden. So können beispielsweise in einem Lern- oder Initialisierungsmodus genaue Informationen zu Mustern des Leistungsdichtespektrums von zu erfassenden Objekten und/oder von Störquellen ermittelt werden. Das Leistungsdichtespektrum zeigt die Verteilung der abgestrahlten elektromagnetischen Leistung innerhalb eines Frequenzbereichs. Im Zusammenhang mit der vorliegenden Erfindung ist vor allem der Frequenzbereich von 0 bis etwa 1 GHz von Interesse.

Ausgangsseitig stellen FFT-Empfänger das gegebenenfalls frequenzabhängig verstärkte bzw. gedämpfte Messsignal aufgelöst bzw. zerlegt in frequenzabhängige Leistungsdichteanteile als Nutzsignal zur weiteren Verarbeitung bereit. Das Nutzsignal wird vorzugsweise nach jedem Messintervall aktualisiert.

Das Nutzsignal ist allgemein eine durch Verarbeitung der Messgrösse gewonnene Grösse, die mindestens eine charakteristische Eigenheit der Messgrösse repräsentiert. Diese Eigenheit kann z.B. eine Amplitude der Messgrösse sein, die kontinuierlich oder während Messintervallen oder zu vorgebbaren Zeitpunkten erfasst, gegebenenfalls verstärkt und/oder gefiltert und als analoges Spannungssignal an einem Ausgang ausgegeben und/oder in Form digitalisierter Werte bereitgestellt wird. Das Nutzsignal wird kontinuierlich oder zu vorgebbaren Zeitpunkten oder periodisch entsprechend dem zeitlichen Verlauf der Messgrösse aktualisiert.

Wenn die Messgrösse periodisch während Messintervallen vorgegebener Dauer erfasst wird, kann sie in spektrale Anteile zerlegt werden. Jeder dieser Spektralanteile der Messgrösse kann unterschiedliche Eigenheiten aufweisen. Das Nutzsignal kann deshalb für jeden der Spektralbereiche individuelle Anteile umfassen. Diese können z.B. als analoge Spannungssignale an mehreren Ausgängen ausgegeben und/oder als digitalisierte Werte bereitgestellt werden.

Digitalisierte Werte können bei Bedarf in einem Speicher gespeichert und so für die spätere Verarbeitung bereitgestellt werden.

Eine charakteristische Eigenheit der Messgrösse ist insbesondere deren zeitliches Verhalten. Folglich ist auch die Entwicklung des Nutzsignals in Abhängigkeit der Zeit ein Nutzsignal. Zur einfacheren weiteren Verarbeitung können zu unterschiedlichen Zeiten erfasste Werte des Nutzsignals zwischengespeichert werden.

Das jeweilige Nutzsignal wird in einer Auswertevorrichtung mit mindestens einem Vergleichsmuster verglichen. Abhängig vom Vergleichsergebnis stellt die Auswertevorrichtung eine entsprechende Ausgabegrösse bereit. Vergleichsmuster können so festgelegt werden, dass sie mit Nutzsignalen von zu erfassenden Objekten korrelieren. Durch Vergleich des Nutzsignals mit einem oder mehreren Vergleichsmustern ermittelt die Auswertevorrichtung, ob eine ausreichende Übereinstimmung des Musters des Nutzsignals mit mindestens einem der Vergleichsmuster vorliegt. Das Ergebnis kann z.B. als Statussignal für ein erkanntes Objekt bereitgestellt werden. Falls mehrere Vergleichsmuster für unterschiedliche Objekte oder Objektkategorien definiert sind, kann die Auswertevorrichtung zusätzlich Informationen dazu bereitstellen, welches Objekt bzw. welche Objektkategorie erkannt worden ist.

Objektkategorien umfassen gleichartige Objekte wie z.B. Schienenfahrzeuge mit ähnlichen elektromagnetischen Emissionsmustern.

Bei einfachen Ausführungsformen des Überwachungssystems, deren Empfangsvorrichtung z.B. nur einen Analog-Empfänger umfasst, kann das Vergleichsmuster z.B. ein vorgegebener konstanter Vergleichs- oder Schwellwert für den Signalpegel bzw. für die Amplitude des Nutzsignals und/oder ein entsprechender Wert für die Zeitdauer des Nutzsignals sein.

Ist der Pegel und/oder die Dauer des Nutzsignals mindestens so gross wie der zugehörige Schwellwert, interpretiert die Auswertevorrichtung dies als Erfassung eines Verkehrsteilnehmers. Schwellwerte können beispielsweise analog durch Spannungsteiler definiert sein. Alternativ können Vergleichswerte auch in einem Speichermedium digital gespeichert sein. Zum Vergleichen der Werte kann das Nutzsignal z.B. mittels eines AD-Wandlers digitalisiert werden. Alternativ könnte der gespeicherte Vergleichswert mittels eines DA-Wandlers in einen analogen Spannungswert transformiert werden, der dann z.B. mittels eines Komparators mit dem Nutzsignal verglichen wird.

Vorzugsweise umfasst die Auswertevorrichtung Einstellmittel zum Festlegen von Schwellwerten. Bei weiteren Ausführungsformen, die einen Analog-Empfänger umfassen, kann anstelle eines einzelnen Schwellwerts ein zeitabhängiger Schwellwert bzw. eine Schwellfunktion vorgegeben sein. Solche Funktionen können beispielsweise definiert werden, indem für mehrere Stützstellen eines Messintervalls zugehörige Schwellwerte gespeichert werden. Die Anzahl Stützstellen liegt vorzugsweise im Bereich von etwa 5 bis etwa 50.

Bei Ausführungsformen des Überwachungssystems mit einem FFT-Empfänger können in analoger Weise Schwellwerte in Abhängigkeit der Zeit und/oder in Abhängigkeit der Frequenz definiert sein.

Die Filtereinrichtung definiert ein Frequenzmuster der zu erfassenden elektromagnetischen Strahlung.

Die Filtereinrichtung kann z.B. kostengünstige passive Hochpass-, Tiefpass- oder Bandpassfilter umfassen. Dies ist insbesondere dann vorteilhaft, wenn nur Frequenzen in einem oder mehreren fest vorgegebenen Frequenzbereichen erfasst werden sollen.

Alternativ können auch aktive Filter oder ein oder mehrere seriell oder parallel angeordnete Filterbanken verwendet werden. Vorzugsweise umfasst die Filtereinrichtung mehrere Filter, die einfach für unterschiedliche Frequenzbereiche konfigurierbar sind. Die Dämpfung bzw. allgemein der Verstärkungsfaktor jedes Filters kann fest vorgegeben sein. Bevorzugt sind die Filter jedoch so ausgebildet, dass ihr Verstärkungsfaktor im jeweiligen Frequenzbereich individuell z.B. durch ein Steuersignal eingestellt werden kann. Zu dieser Kategorie gehören insbesondere Switched-Capacitor-Filter, auch SC-Filter genannt und programmierbare Filterbanken.

Filter können in der Empfangsvorrichtung eingangsseitig bzw. in direkter Verbindung mit der Antenne und/oder ausgangsseitig bzw. im Verbindungsweg zur Auswertevorrichtung angeordnet sein. Alternativ oder zusätzlich können Filter als integrale frequenzselektive Elemente in einer Verstärkerschaltung ausgebildet sein.

Die Filtereinrichtung ist dazu ausgebildet, nur Signale innerhalb eines vorgebbaren Nutzbereichs des Frequenzspektrums passieren zu lassen, wobei der Nutzbereich zusammenhängend oder aus mehreren Teilbereichen zusammengesetzt sein kann.

Vorzugsweise sind Konfigurationsmittel zum Definieren unterschiedlicher Nutzbereiche vorgesehen. Dabei können zu filternde oder durchzulassende Frequenzbandabschnitte z.B. durch Steuersignale eines Prozessors einfach konfiguriert werden. Vorzugsweise sind die entsprechenden Konfigurationsdaten für mindestens ein Frequenzmuster in einem Datenspeicher gespeichert.

Die Konfiguration kann beispielsweise in einem Initialisierungsprozess erfolgen, bevor ein Überwachungsmodus des Überwachungssystems aktiviert wird.

Alternativ oder zusätzlich kann das Überwachungssystem auch dazu ausgebildet sein, die Filterkonfiguration innerhalb des Überwachungs-Betriebsmodus zu ändern. Die Filtereinrichtung kann demzufolge jederzeit flexibel an unterschiedliche Anforderungen angepasst werden. Insbesondere kann z.B. eine Steuerung veranlassen, dass während des Betriebs des Überwachungssystems Filtereinstellungen an sich ändernde Störquellen angepasst werden. Alternativ oder zusätzlich kann die Konfiguration der Filtereinrichtung auf diese Weise bei Bedarf temporär so optimiert werden, dass Verkehrsteilnehmer mit unterschiedlichen Emissionsspektren individuell oder gemeinsam erfasst werden können.

Wenn die Frequenzbereiche bekannt sind, in denen zu detektierende Objekte bzw. Verkehrsteilnehmer elektromagnetische Strahlung emittieren, kann die Filtereinrichtung so konfiguriert werden, dass nur Signale in diesen Frequenzbereichen passieren können. Alternativ oder zusätzlich können auch Frequenzbereiche gesperrt werden, in denen mit Störsignalen gerechnet werden muss.

Zusätzlich oder alternativ kann die Filtereinrichtung so konfiguriert werden, dass sie beim Vorliegen von Störstrahlern einen Weissabgleich vornimmt. Dabei werden die Filter so konfiguriert, dass nur Signale passieren können, deren Amplitude grösser ist als jene der Störstrahler allein.

Da die Wirkung von Schwellwerten vom jeweiligen Verstärkungsfaktor des Verstärkers abhängig ist, werden bei der Auswertevorrichtung Vergleichswerte bzw. Schwellwerte vorzugsweise in Abhängigkeit des Verstärkungsfaktors des Verstärkers festgelegt. Zum Festlegen einer Ansprechschwelle könnte alternativ auch der Verstärkungsfaktor für vorgegebene Schwellwerte festgelegt werden. Sobald der Pegel bzw. die Amplitude der gegebenenfalls verstärkten Messgrösse mindestens gleich gross ist wie der Schwellwert, wird das entsprechende Nutzsignal von der Auswertevorrichtung als Erfassung eines Verkehrsteilnehmers gewertet.

Die Unterdrückung von Störungen, insbesondere von Störspannungsspitzen, kann weiter verbessert werden, indem z.B. für Messintervalle mit vorgegebener Dauer eine minimale Dauer festgelegt wird, während der ein Messsignal mindestens so gross sein muss wie der Schwellwert, damit dies als Erfassung eines Verkehrsteilnehmers gewertet wird.

Optional kann der Verstärkungsfaktor so gross gewählt werden, dass das vom Verstärker bereitgestellte Nutzsignal der Betriebsspannung bzw. dem maximal möglichen Ausgangspegel des Verstärkers entspricht, wenn Signale eines Verkehrsteilnehmers innerhalb des Erfassungsbereichs empfangen werden. Anstelle eines Schwellwertes für die Signalamplitude des Nutzsignals kann in diesem Fall ein Schwellwert für die minimale Dauer vorgegeben werden, während der das Nutzsignal den Maximalpegel aufweisen muss, damit dies als Erfassung eines Verkehrsteilnehmers gewertet wird.

Bei Bedarf kann die Erfassung von Verkehrsteilnehmern weiter optimiert werden, indem z.B. die Ergebnisse aus mindestens zwei vorzugsweise aufeinanderfolgenden Messintervallen gemäss vorgegebenen Plausibilitätskriterien ausgewertet werden. Die Auswertevorrichtung kann für diesen Zweck gespeicherte Vorschriften zur digitalen Verarbeitung des Nutzsignals umfassen. Diese Vorschriften können z.B. festlegen, dass innerhalb einer vorgebbaren Anzahl n aufeinanderfolgender Messintervalle eine minimale Anzahl m der Signale einen Schwellwert für die Amplitude und/oder einen Schwellwert für die Zeit überschreiten muss. Alternativ zum Überschreiten von Schwellwerten könnten z.B. auch Differenzen zwischen den Werten des Nutzsignals und vorgegebenen Vergleichswerten ermittelt und gegebenenfalls für aufeinanderfolgende Messintervalle summiert werden. Dies ermöglicht eine verbesserte Erfassung von Ähnlichkeiten zwischen dem Nutzsignal und den Vergleichsgrössen eines oder mehrerer gespeicherter Muster.

Die Erkennung von Mustern in den Nutzsignalen kann auch mit Algorithmen erfolgen, die im Bereich der digitalen Bildverarbeitung bzw. der Objekterkennung verwendet werden. Dies gilt insbesondere für Nutzsignale, die mittels einer Fast-Fourier-Transformation (FFT) bereitgestellt werden. Dabei entspricht z.B. die Amplitude dem Helligkeitswert eines Pixels und die Phasenlage dem Farbort (z.B. den Anteilen von Rot, Grün und Blau im RGB-Farbraum). Bei solchen Verfahren wird das Ergebnis einer FFT in ein entsprechendes Bild transformiert und anschliessend mit den jeweiligen Bilderkennungs-Algorithmen auf Ähnlichkeiten mit gespeicherten Mustern geprüft. Als Beispiel für einen solchen Algorithmus wird hier auf das Template-Matching verwiesen.

Vorzugsweise umfasst das Überwachungssystem Mittel zum Vorgeben oder Einstellen des Verstärkungsfaktors des Verstärkers. Der Verstärkungsfaktor bestimmt die Empfindlichkeit des Systems und damit dessen räumlichen Erfassungsbereich, innerhalb dessen Verkehrsteilnehmer mit bestimmten Strahlungsemissionen erfasst werden können.

Anhand einiger Figuren wird die Erfindung im Folgenden näher beschrieben. Dabei zeigen
- Figur 1: eine beispielhafte Anordnung eines Überwachungssystems bei einer Eisenbahnbaustelle,
- Figur 2: ein Erfassungsgerät des Überwachungssystems,
- Figur 3: ein Diagramm mit der zeitlichen Entwicklung der Amplituden des Mess- und des Nutzsignals,
- Figur 4: ein weiteres Diagramm mit dem zeitlichen Verlauf eines Nutzsignals bei grossem Verstärkungsfaktor,
- Figur 5: ein Diagramm mit einer Abfolge von Spektraldichteverteilungen während einer Abfolge mehrerer Messintervalle,
- Figur 6: ein erstes Vergleichsmuster für das Nutzsignal, wobei die Vergleichswerte in Abhängigkeit der Zeit und der Frequenz variieren,
- Figur 7: ein zweites Vergleichsmuster, dessen Vergleichswerte für unterschiedliche Frequenzen zeitlich nicht veränderlich sind,
- Figur 8: ein drittes Vergleichsmuster mit einem zeit- und frequenzinvarianten Vergleichswert,
- Figur 9: eine Anordnung eines Überwachungssystems mit mehreren Erfassungsgeräten bei einer Eisenbahnbaustelle.

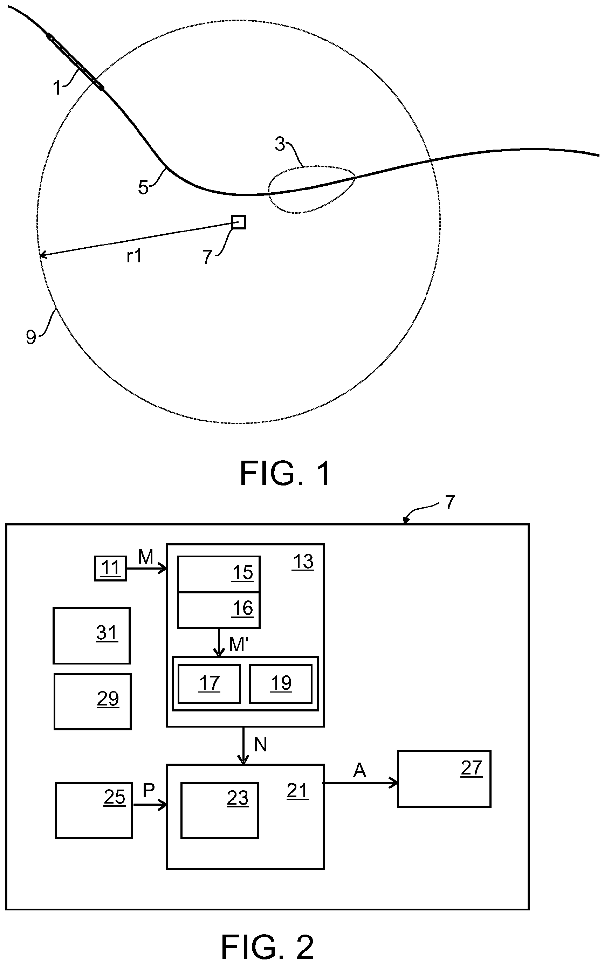

Figur 1 zeigt schematisch ein Überwachungssystem das zur Überwachung herannahender Züge 1 bei einer Baustelle 3 an einem Bahngeleise 5 angeordnet ist.

Das Überwachungssystem umfasst ein Erfassungsgerät 7, das in der Nähe der Baustelle 3 angeordnet ist. Das Erfassungsgerät 7 erfasst elektromagnetische Strahlung von herannahenden Zügen, sobald sich diese innerhalb eines Erfassungsbereichs 9 des Erfassungsgeräts 7 befinden. Der Erfassungsbereich 9 ist abhängig von der Stärke und von den Ausbreitungseigenschaften der emittierten elektromagnetischen Strahlung sowie von der vorzugsweise einstellbaren Empfindlichkeit des Erfassungsgeräts 7. In Figur 1 ist der Erfassungsbereich 9 durch einen gepunkteten Kreis mit Radius r1 um das Erfassungsgerät 7 dargestellt. Der Radius r1 des Erfassungsbereichs kann in Abhängigkeit der jeweiligen Einsatzbedingungen durch Einstellung einer entsprechenden Empfindlichkeit festgelegt werden. Typische Bereiche sind z.B. 0 bis 2km, 0 bis 500m oder 4m bis 50m.

Dies ermöglicht eine vergleichsweise freie Wahl eines geeigneten Standortes für das Erfassungsgerät 7.

Figur 2 zeigt beispielhaft ein Erfassungsgerät 7. Dieses umfasst eine Antenne 11, die z.B. in eine Gerätesteuerung (nicht dargestellt) integriert ist oder alternativ über einen Antennenanschluss (nicht dargestellt) mit der Gerätesteuerung verbunden werden kann.

Die Antenne 11 bzw. der Antennenanschluss sind eingangsseitig mit einer Empfangsvorrichtung 13 der Gerätesteuerung verbunden. Die Antenne 11 kann beispielsweise zusammen mit der Empfangsvorrichtung 13 auf einem gemeinsamen Substrat angeordnet sein, beispielsweise in Gestalt einer gedruckten geraden oder gewundenen Leiterbahn. Dies hat den Vorteil, dass die Antenne 11 raumsparend angeordnet werden kann, und dass auch Signale geringer Stärke bei gutem Signal/Rausch-Verhältnis erfasst werden können. Alternativ kann eine Antenne 11 z.B. über einen Antennenanschluss mit der Empfangsvorrichtung 13 verbunden werden. Solche Antennen 11 können einfach entsprechend der jeweiligen Anforderungen positioniert und ausgerichtet werden. Optional können auch mehrere Antennen 11 vorgesehen sein, die für den Empfang von Signalen aus unterschiedlichen Richtungen und/oder in unterschiedlichen Frequenzbereichen optimiert sind (nicht dargestellt).

Die Empfangsvorrichtung 13 umfasst Mittel zum Aufbereiten einer von der Antenne 11 empfangenen Messgrösse M und zum Bereitstellen eines auf dieser Messgrösse M basierenden, weiter verarbeitbaren Nutzsignals N.

Die Empfangsvorrichtung 13 umfasst insbesondere eine Filtereinrichtung 15, deren Frequenzgang mit einem oder mehreren Filtern entsprechend der zu erfassenden Messgrösse M festgelegt oder einstellbar ist. Vorzugsweise umfasst die Filtereinrichtung 15 für diesen Zweck einen oder mehrere Frequenzbanken, die z.B. durch Steuersignale eines Prozessors der Gerätesteuerung konfiguriert werden können. Frequenzbanken umfassen mehrere (z.B. 8, 16 oder 24) Filter für Teilbereiche eines grösseren Frequenzbereichs (z.B. 1GHz oder 100MHz), wobei diese Teilbereiche gleiche oder unterschiedliche Bandbreiten aufweisen können. Mehrere (z.B. 2, 3 oder 4) Frequenzbanken können parallel und/oder seriell miteinander gekoppelt sein.

Für jedes der Filter kann der Verstärkungsfaktor bzw. die Dämpfung individuell vorgegeben werden. Vorzugsweise können dabei auch Zwischenwerte festgelegt werden, die zwischen einem Minimalwert und einem Maximalwert liegen.

In der Regel umfasst die Empfangsvorrichtung 13 einen Verstärker bzw. allgemein einen aktiven Impedanzwandler 16, der die empfangenen Signale mit einem vorzugsweise einstellbaren Verstärkungsfaktor verstärkt und mit veränderter, insbesondere geringerer Impedanz bereitstellt.

Die Filtereinrichtung 15 kann vollständig oder teilweise als Bestandteil des Impedanzwandlers 16 ausgebildet sein.

Ein Analog-Empfänger 17 und/oder einen FFT-Empfänger 19 der Empfangsvorrichtung 13 stellen ein auf der Messgrösse M basierendes Nutzsignal N für die weitere Verarbeitung bereit. Der Impedanzwandler 16 bzw. Verstärker kann integraler Bestandteil des Analogempfängers 17 und/oder des FFT-Empfängers 19 sein.

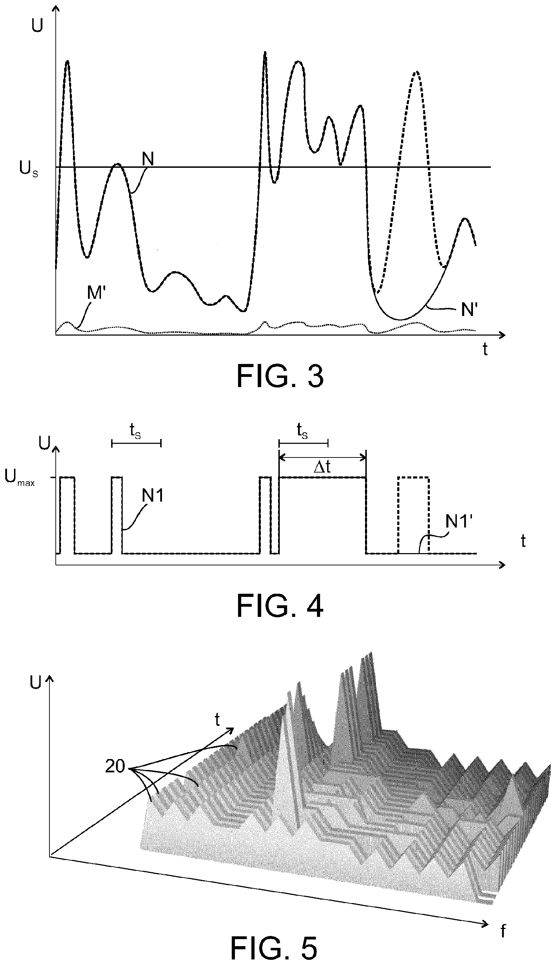

Figur 3 zeigt beispielhaft ein Signal M' (gepunktete Linie), das im Wesentlichen dem gleichgerichteten Messsignal M entspricht. Die Empfangsvorrichtung 13 kann das durch Verstärkung des Signals M' gewonnene Signal direkt als Nutzsignal N bereitstellen (unterbrochene dicke Line). Dargestellt ist jeweils die Amplitude bzw. der Pegel U der Spannung in Abhängigkeit der Zeit t.

Alternativ können z.B. störende Frequenzanteile des Messsignals M durch die Filtereinrichtung 15 herausgefiltert werden. Ein entsprechendes Nutzsignal N' ist in Figur 3 als dünne ausgezogene Linie dargestellt. Dabei hat das Messsignal M nur beim zweitletzten Maximum Frequenzanteile, die im herausgefilterten Frequenzbereich liegen. Durch die Fokussierung auf relevante Bereiche können Messungen in der Regel schneller und effizienter durchgeführt werden.

Alternativ könnte der Verstärkungsfaktor und/oder die Linearität des Impedanzwandlers 16 so festgelegt werden, dass relevante Signale von zu erfassenden Verkehrsteilnehmern ein Nutzsignal mit einem maximal möglichen Spannungspegel Uₘₐₓ bewirken. Figur 4 zeigt beispielhaft entsprechende Nutzsignale N1 und N1', die durch Verarbeitung des in Figur 3 dargestellten Signals M' erzeugt werden könnten.

Analog-Empfänger 17 können dazu ausgebildet sein, die Messgrösse M bzw. die daraus gewonnenen Signale M' zumindest näherungsweise in Echtzeit in Nutzsignale N zu wandeln. Dies gilt insbesondere bei Analog-Empfängern 17, die im Wesentlichen nur eine Filtereinrichtung 15 und/oder einen Impedanzwandler 16 umfassen.

Alternativ können Analog-Empfänger 17 dazu ausgebildet sein, während Messintervallen, deren Dauer t_{M} vorzugsweise von der Gerätesteuerung vorgebbar ist, Signale M' zu erfassen und diese weiter zu Nutzsignalen N zu verarbeiten, die dann vorzugsweise nach jedem Messintervall aktualisiert werden.

Insbesondere können erfasste Signale M' z.B. während der Dauer t_{M} der Messintervalle integriert oder in sonstiger Weise verarbeitet werden, um den Einfluss von Störungen wie z.B. Spannungsspitzen zu verkleinern.

FFT-Empfänger 19 erfassen die von der Messgrösse M generierten Signale M' ebenfalls während Messintervallen. Die Dauer t_{M} von Messintervallen kann je nach Aufgabenstellung z.B. zwischen etwa 0.5ms und 500ms, insbesondere zwischen etwa 50ms und 100ms vorgegeben werden. Längere Messzeiten t_{M} bis etwa 5s oder 10s sind insbesondere dann vorteilhaft, wenn Muster von zeitlich ändernden Spektraldichteverteilungen erfasst werden sollen.

Die Nutzsignale N von FFT-Empfängern 19 sind innerhalb von Messintervallen erfasste Spektraldichteverteilungen 20. Dabei wird innerhalb eines vorgebbaren Frequenz- bzw. Spektralbereichs von z.B. 0 bis 27MHz oder 0 bis 1GHz durch Fast-Fourier-Transformation die Spektraldichte ermittelt und als Amplitude U in Abhängigkeit der Frequenz f bereitgestellt. Dabei können z.B. für eine vorgegebene Anzahl Teilintervalle des Frequenzbereichs zugehörige Amplitudenwerte U in einem Speicher der Empfangsvorrichtung 13 gespeichert werden. Die Anzahl Teilintervalle wird vorzugsweise in Abhängigkeit der Dauer t_{M} der Messintervalle festgelegt, da diese die spektrale Auflösung bei der Fast-Fourier-Transformation bestimmt.

Figur 5 zeigt eine Abfolge von Spektraldichteverteilungen 20, die in mehreren aufeinanderfolgenden Messintervallen gleicher Dauer t_{M} erfasst worden sind. Diese bilden gesamthaft ein Muster. Auch bezüglich der Zeit t und/oder der Frequenz f eingeschränkte Teilbereiche dieses Musters sind Muster, insbesondere die Spektraldichteverteilung in einem einzelnen Messintervall und/oder die auf einen Teilbereich des gesamten erfassen Spektralbereichs begrenzte Spektraldichteverteilung zu einem bestimmten Zeitpunkt oder in Abhängigkeit der Zeit.

Vorzugsweise sind ein oder mehrere Vergleichsmuster P, die den von zu erfassenden Verkehrsteilnehmern emittierten Strahlungsmustern entsprechen, in geeigneter Form digital in einem Musterspeicher 25 gespeichert. Vergleichsmuster P umfassen mindestens einen Vergleichswert für das Nutzsignal N, also beispielsweise einen Schwellspannungswert U_{S} für den Spannungspegel des Nutzsignals N und/oder eine Vergleichszeit t_{S} für die Dauer Δt von erkannten Nutzsignalpulsen. Diese Werte können konstant sein, wie dies in den Figuren 3 und 4 dargestellt ist. Die Vergleichswerte können alternativ auch in Abhängigkeit der Zeit t und/oder der Frequenz f vorgegeben sein. Vorzugsweise ist zu jedem Vergleichsmuster P auch ein Identifikationscode gespeichert, der eine eindeutige Zuordnung zu einem zu erfassenden Objekt sicherstellt.

Vergleichsmuster P und ihr Bezug zum jeweiligen Verkehrsteilnehmer bzw. elektromagnetische Strahlung emittierenden Objekt können z.B. über eine Kommunikationsschnittstelle 29 des Erfassungsgeräts 7 von einer externen Datenbank in den Musterspeicher 25 eingelesen werden. Alternativ oder zusätzlich kann die Gerätesteuerung einen Lernmodus umfassen, in dem neue Vergleichsmuster P erzeugt werden können.

Dies kann z.B. durch Bearbeiten eines neu erzeugten Basismusters oder der Kopie eines bereits existierenden Vergleichsmusters P erfolgen. Für diesen Zweck kann das Erfassungsgerät 7 z.B. eine grafische Benutzerschnittstelle 31 umfassen. Alternativ kann eine solche Benutzerschnittstelle 31 auch an einem Konfigurationsgerät ausgebildet sein, welches z.B. über eine Kommunikationsleitung oder drahtlos mit der Kommunikationsschnittstelle 29 des Erfassungsgeräts 7 verbindbar ist. Vorzugsweise können dabei nicht nur Vergleichswerte U_{S} für das Nutzsignal N vorgegeben werden, sondern auch andere Parameter wie z.B. Eckwerte des berücksichtigten Frequenz- und/oder Zeitbereichs, Auflösung bzw. Anzahl Stützstellen im Frequenz- und/oder Zeitbereich Dauer t_{M} von Messintervallen.

Alternativ oder zusätzlich kann der Lernmodus auch ein Verfahren umfassen, mit dem basierend auf erfassten Messgrössen M Vergleichsmuster P generiert werden können. Vorzugsweise werden dabei charakteristische Muster der Messgrösse M mit und ohne Emissionen von zu erfassenden Objekten ermittelt. Die Werte des Vergleichsmusters P werden dann so festgelegt, dass sie höher sind als die jeweiligen Werte ohne Beitrag der zu erfassenden Objekte. Dadurch kann verhindert werden, dass Emissionen von Störquellen fälschlicherweise als zu erfassende Objekte erkannt werden.

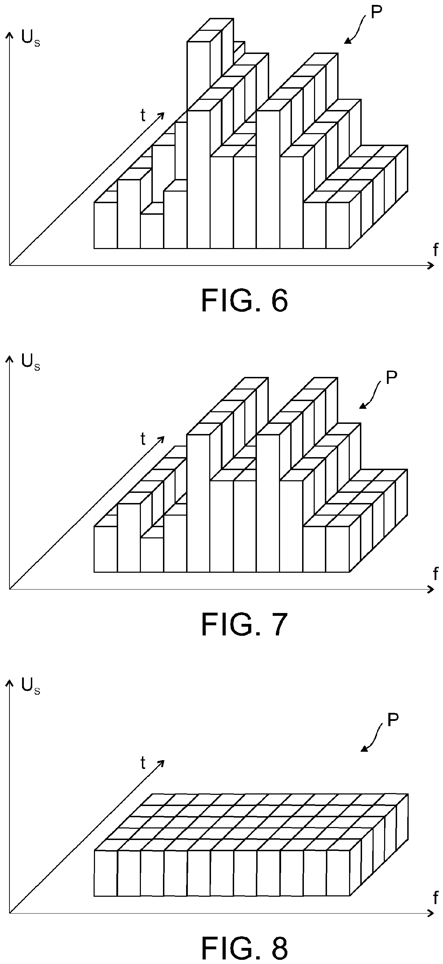

Figur 6 zeigt ein Beispiel eines Vergleichsmusters P in Gestalt einer zweidimensionalen Schwellwertfunktion U_{S}(f,t), deren Werte U_{S} in Abhängigkeit der Frequenz f und der Zeit t vorgegeben sind.

Für vorgegebene Stützstellen, die durch Wertepaare der beiden Parameter Zeit t und Frequenz f definiert sind, ist jeweils der zugehörige Wert U_{S} der Schwellwertfunktion gespeichert.

Figur 7 zeigt beispielhaft ein weiteres Vergleichsmuster P, das nur eine Frequenzabhängigkeit aufweist, die sich zeitlich jedoch nicht ändert. Solche Vergleichsmuster P können durch eine eindimensionale Funktion U_{S}(f) definiert werden. Alternativ könnte ein Vergleichsmuster P auch nur eine Zeitabhängigkeit aufweisen und durch eine eindimensionale Funktion U_{S}(t) definiert sein. Solche Vergleichsmuster eignen sich insbesondere dann, wenn das Nutzsignal N nicht in Spektralanteile zerlegt ist.

Figur 8 zeigt beispielhaft ein weiteres Vergleichsmuster P, das zeit- und frequenzinvariant ist. Solche Vergleichsmuster P können durch einen einzigen Wert U_{S} definiert werden.

Die Wertebereiche der Parameter Zeit t und Frequenz f und die Anzahl Stützstellen in jeder dieser beiden Dimensionen sind vorzugsweise entsprechend der jeweiligen Anforderungen vorgebbar. Selbstverständlich können Vergleichsmuster P auch in anderer Weise gespeichert oder in sonstiger Weise vorgegeben sein. Insbesondere können Funktionswerte zwischen zwei Stützstellen z.B. durch Interpolation berechnet werden. Alternativ können Schwellfunktionen U_{S}(t,f) durch generische Formeln definiert sein.

Die von der Empfangsvorrichtung 13 bereitgestellten Nutzsignale N bzw. N', N1 oder N1' werden von einer Auswertevorrichtung 21 ausgewertet. Dabei werden diese Nutzsignale N in einem Vergleicher 23 mit mindestens einem der vorgegebenen Vergleichsmuster P verglichen, und eine vom Vergleichsergebnis bzw. vom Übereinstimmungsgrad abhängige Ausgabegrösse A wird an einer Ausgabeschnittstelle 27 bereitgestellt.

Die Ausgabeschnittstelle 27 kann z.B. eines oder mehrere der folgenden Elemente umfassen: Eine optische Anzeige, insbesondere ein Display und/oder eine Status- oder Warnleuchte, einen akustischen Signalgeber. Alternativ oder zusätzlich kann die Ausgabeschnittstelle 27 als Teil der Kommunikationsschnittstelle 29 ausgebildet sein.

Die Auswertevorrichtung 21 kann vorzugsweise für unterschiedliche Arten der Datenauswertung konfiguriert werden.

Nachfolgend ein Beispiel für eine mögliche Konfiguration:
Wenn das Nutzsignal N zumindest in einem Abschnitt des Frequenzbereichs den zugehörigen Vergleichswert U_{S} des Vergleichsmusters P überschreitet, wird als Ausgabegrösse A ein Status "erkanntes Objekt" ausgegeben.

Bei alternativen Konfigurationen können z.B. ein oder mehrere der folgenden Parameter geändert werden:
- Die Ausgabegrösse A wird weiter differenziert, wobei z.B. durch Angabe mindestens eines Identifikationscodes ein oder mehrere erkannte Objekte spezifiziert werden und/oder wobei der Informationsgehalt der Ausgabegrösse A in anderer Weise erhöht wird, indem z.B. Angaben zur Signalstärke und/oder zur Dauer der erfassten Signale bereitgestellt werden.
- Wenn das Nutzsignal N in Frequenzanteile zerlegt ist, kann z.B. festgelegt werden, in welchem oder welchen der Frequenzbereiche das Nutzsignal N den zugehörigen Vergleichswert überschreiten muss, damit die Ausgabegrösse A den Status "erkanntes Objekt" erhält.
- Es kann vorgegeben werden, dass zum Festlegen der Ausgabegrösse A das Nutzsignal N aus mehreren Messintervallen berücksichtigt wird.

Selbstverständlich kann die Auswertevorrichtung 21 dazu ausgebildet sein, die bereitgestellten Nutzsignale N in beliebiger anderer Weise weiter zu Ausgabegrössen A für unterschiedliche Anwendungszwecke zu verarbeiten.

Vorzugsweise werden Nutzsignale N und/oder Ausgabegrössen A periodisch oder alternativ dann, wenn sie sich ändern, zusammen dem jeweiligen Zeitpunkt als Datensatz in einem Speicher des Erfassungsgeräts 7 gespeichert, sodass sie zur späteren Auswertung weiterhin verfügbar sind.

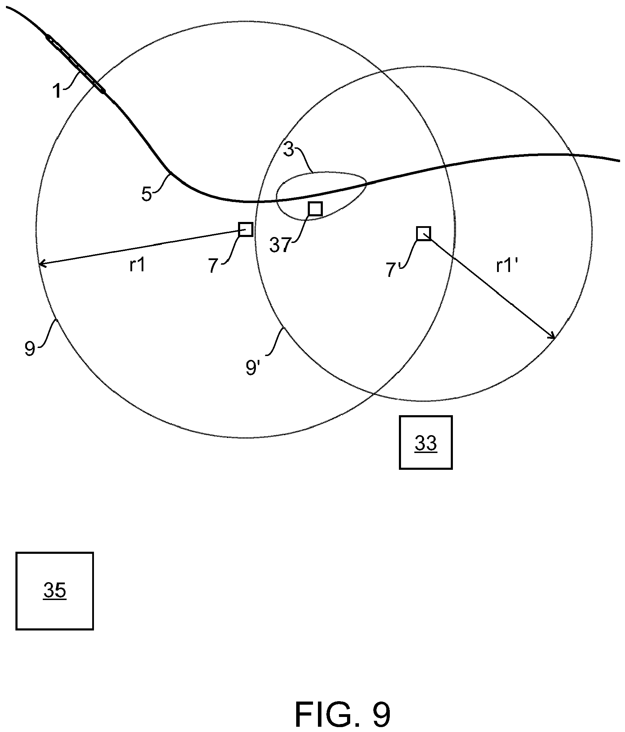

Über die Kommunikationsschnittstelle 29 können solche Daten an externe Geräte übermittelt oder durch externe Geräte abgefragt werden. Externe Geräte sind z.B. eine Gruppensteuerung 33 (Figur 9), die ein oder mehrere Erfassungsgeräte 7 am jeweiligen Einsatzort koordiniert, oder eine Datenzentrale 35, die über leistungsstarke Kommunikationseinrichtungen mit mehreren Gruppensteuerungen 33 und/oder Erfassungsgeräten 7 verbunden ist.

Figur 9 zeigt ein Überwachungssystem, bei dem im Vergleich zu jenem aus Figur 1 ein zweites Erfassungsgerät 7' an einer anderen Position relativ zur Baustelle 3 und zum Bahngeleise 5 angeordnet ist. Der durch den Kreis mit Radius r1' dargestellte Erfassungsbereich ist aufgrund eines kleineren eingestellten Verstärkungsfaktors kleiner als jener des ersten Erfassungsgeräts 7. Innerhalb des gemeinsamen Erfassungsbereichs der beiden Erfassungsgeräte 7, 7' können Züge 1 redundant von beiden Erfassungsgeräten 7, 7' erfasst werden. Das zweite Erfassungsgerät 7' ist so angeordnet, dass es Züge 1, die sich von rechts der Baustelle nähern, früher erfasst als erste Erfassungsgerät 7. Beide Erfassungsgeräte 7, 7' übermitteln Informationen zu erkannten Objekten ohne Verzögerung an die zugehörige, in Funkreichweite angeordnete Gruppensteuerung 33. Die Gruppensteuerung 33 wiederum sendet ein Alarmsignal an eine bei der Baustelle 3 angeordnete Alarmeinrichtung 37. Diese aktiviert sofort einen optischen und/oder akustischen Alarmgeber. Optional könnte die Alarmeinrichtung 37 auch integraler Bestandteil der Gruppensteuerung 33 sein.

Wenn die Gruppensteuerung 33 innerhalb einer vorgebbaren Zeit von z.B. weniger als 3s bis 10s nach dem Empfang eines Signals von der einen Erfassungsvorrichtung 7 kein Signal von der anderen Erfassungsvorrichtung 7' empfängt, kann sie dies als Indiz für einen Defekt werten und z.B. eine entsprechende Warnmeldung an die Datenzentrale 35 übermitteln.

Vorzugsweise umfasst die Gruppensteuerung 33 einen Testsender, der dazu ausgebildet ist, periodisch, z.B. alle 3 bis 4s Testsignale auszusenden. Wenn die Erfassungsgeräte 7, 7' nicht unmittelbar danach eine Bestätigungsmeldung an die Gruppensteuerung 33 übermitteln, ist dies ein Anzeichen für einen Defekt. Die Gruppensteuerung 33 kann z.B. mittels einer Alarmmeldung an die Alarmeinrichtung 37 und/oder an die Datenzentrale 35 auf diesen Defekt hinweisen. Vorzugsweise umfassen die Meldungen der Erfassungsgeräte 7, 7' eine Gerätekennung, sodass die Gruppensteuerung 33 die Herkunft der Signale ermitteln kann. Optional können auch die Testsignale für jedes zu testende Erfassungsgerät 7, 7' individuell festgelegt werden. Diese Art von Selbsttest funktioniert auch für eine Gruppensteuerung 33 in Kombination mit nur einem Erfassungsgerät 7.

Erfassungsgeräte 7, 7' können auch zum Bestimmen der Geschwindigkeit und der Bewegungsrichtung eines Fahrzeugs verwendet werden. Für diesen Zweck werden zwei Erfassungsgeräte 7, 7' mit einem geringen gegenseitigen Abstand von z.B. 1m bis 10m entlang eines Verkehrswegs angeordnet. Der Verstärkungsfaktor beider Erfassungsgeräte 7, 7' wird so klein gewählt, dass nur Objekte erfasst werden, die nahe, d.h. innerhalb von wenigen Metern bei diesen Erfassungsgeräten 7, 7' sind.

Aus der Reihenfolge und der Zeitdifferenz der Signale der beiden Erfassungsgeräte 7, 7' und deren gegenseitigen Abstand berechnet die Gruppensteuerung 33 Richtung und Geschwindigkeit des Fahrzeugs.

## Patentansprüche

1. Überwachungssystem zum Überwachen von Verkehrsteilnehmern in einem Erfassungsbereich, umfassend mindestens ein Erfassungsgerät (7) mit
a) einer Empfangsvorrichtung (13), die dazu ausgebildet ist, eine Messgrösse (M) zu erfassen, die durch die Verkehrsteilnehmer beeinflussbarist, wenn sich diese Verkehrsteilnehmer im Erfassungsbereich befinden, und mit
b) einer Auswertevorrichtung (21) zum Ermitteln und Bereitstellen einer von der Messgrösse (M) abhängigen Ausgabegrösse (A), **dadurch gekennzeichnet, dass** das Erfassungsgerät (7) eine mit der Empfangsvorrichtung (13) verbindbare oder verbundene Antenne (11) umfasst, dass die Empfangsvorrichtung (13) eine Filtereinrichtung (15) umfasst, deren Frequenzgang entsprechend der zu erfassenden Messgrösse (M) festgelegt oder einstellbar ist, dass die Empfangsvorrichtung (13) mindestens einen Empfänger (17, 19) umfasst, der ein auf der Messgrösse (M) basierendes Nutzsignal (N) bereitstellt, und dass die Auswertevorrichtung (21) einen Vergleicher (23) umfasst, der dazu ausgebildet ist, das von der Empfangsvorrichtung (13) bereitgestellte Nutzsignal (N) mit mindestens einem vorgegebenen Vergleichsmuster (P) zu vergleichen und in Abhängigkeit des Vergleichsergebnisses die Ausgabegrösse (A) bereitzustellen.

2. Überwachungssystem nach Anspruch 1, **dadurch gekennzeichnet**, das Vergleichsmuster (P) eine Vergleichsfunktion für das Nutzsignal (N) ist, wobei diese Vergleichsfunktion ein konstanter Wert ist oder eine Funktion, die einen Vergleichswert in Abhängigkeit der Zeit und/oder der Frequenz definiert.

3. Überwachungssystem nach einem der Ansprüche 1 oder 2, **dadurch gekennzeichnet, dass** das Vergleichsmuster (P) in einem Musterspeicher (25) des Erfassungsgeräts (7) gespeichert ist.

4. Überwachungssystem nach einem der Ansprüche 1 bis 3, **dadurch gekennzeichnet, dass** die Empfangsvorrichtung (13) einen aktiven Impedanzwandler (16) mit einem einstellbaren Verstärkungsfaktor umfasst.

5. Überwachungssystem nach einem der Ansprüche 1 bis 4, **dadurch gekennzeichnet, dass** die Filtereinrichtung (15) mindestens ein passives Filter und/oder mindestens ein aktives Filter umfasst.

6. Überwachungssystem nach einem der Ansprüche 1 bis 5, **dadurch gekennzeichnet, dass** die Filtereinrichtung (15) eine oder mehrere konfigurierbare Frequenzbanken umfasst.

7. Überwachungssystem nach einem der Ansprüche 1 bis 6, **dadurch gekennzeichnet, dass** der Empfänger (17) ein Analog-Empfänger (17) ist, der dazu ausgebildet ist, die Nutzsignale (N) in Gestalt eines analogen oder digitalen Spannungssignals kontinuierlich bereitzustellen oder bezogen auf Messintervalle mit einer vorgegebenen Dauer (t_{M}) periodisch zu aktualisieren.

8. Überwachungssystem nach einem der Ansprüche 1 bis 7, **dadurch gekennzeichnet, dass** der Empfänger (19) ein FFT-Empfänger (19) ist, der dazu ausgebildet ist, Nutzsignale (N) in Gestalt eines die spektrale Leistungsdichteverteilung der Messgrösse (M) repräsentierenden analogen oder digitalen Spannungssignals bezogen auf Messintervalle mit einer vorgegebenen Dauer (t_{M}) periodisch bereitzustellen.

9. Überwachungssystem nach einem der Ansprüche 1 bis 8, **dadurch gekennzeichnet, dass** das Erfassungsgerät (7) eine Kommunikationseinrichtung mit einer Kommunikationsschnittstelle (29) umfasst, die dazu ausgebildet ist, Daten an eine zugehörige Gruppensteuerung (33) und/oder an eine Datenzentrale (35) zu übermitteln und/oder Daten von der Gruppensteuerung (33) und/oder der Datenzentrale (35) zu empfangen.

10. Verfahren zum Überwachen von Verkehrsteilnehmern in einem Erfassungsbereich mit einem Überwachungssystem nach einem der Ansprüche 1 bis 9,
**dadurch gekennzeichnet, dass** die Filtereinrichtung (15) so konfiguriert wird, dass von den Verkehrsteilnehmern emittierte und von der Antenne empfangene elektromagnetische Signale der Messgrösse (M) passieren können, und/oder dass Störsignale der Messgrösse (M) herausgefiltert werden,
dass der mindestens eine Empfänger (17, 19) basierend auf der gefilterten Messgrösse ein Nutzsignal (N) bereitstellt, und dass dieses Nutzsignal (N) durch die Auswertevorrichtung (21) zu einer Ausgabegrösse (A) verarbeitet wird, die erkannte Verkehrsteilnehmer repräsentiert.
